# EUROPÄISCHE PATENTSCHRIFT

(11) **EP 1 188 041 B1**
(45) Veröffentlichungstag und Bekanntmachung des Hinweises auf die Patenterteilung: **13.08.2003**
(21) Anmeldenummer: 00910482.9
(22) Anmeldetag: 28.03.2000
(51) Int. Cl.: G01N 21/63, G01N 21/76, A01C 1/02

(54) **VERFAHREN, ANLAGE SOWIE VERWENDUNG VON MESSEINRICHTUNGEN ZUR BESTIMMUNG DER KEIMFÄHIGKEIT VON SAMENKÖRNERN**
METHOD, SYSTEM AND USE OF MEASURING DEVICES FOR DETERMINING THE GERMINABILITY OF SEEDS
PROCEDE, SYSTEME ET UTILISATION DE DISPOSITIFS DE MESURE SERVANT A LA DETERMINATION DE LA GERMINABILITE DE GRAINES

(30) Priorität: 23.06.1999 DE 19928768
(43) Veröffentlichungstag der Anmeldung: 20.03.2002
(73) Patentinhaber: BÜHLER AG, 9240 Uzwil (CH)
(72) Erfinder: POPP, Fritz-Albert, D-41472 Neuss (DE); YAN, Yu, D-41516 Grevenbroich (DE)
(74) Vertreter: Frommhold, Joachim, Dr.
(86) Internationale Anmeldenummer: CH0000180
(87) Internationale Veröffentlichungsnummer: WO01001114

(56) Entgegenhaltungen:
- EP-A- 0 430 150
- DE-U- 9 417 845
- VESELOVA T V ET AL: "DELAYED LIMINESCENCE OF AIR-DRY SOYBEAN SEEDS AS A MEASURE OF THEIR VIABILITY" PHYSIOLOGIA PLANTARUM,DK,MUNKSGAARD INTERNATIONAL PUBLISHERS, COPENHAGEN, Bd. 65, 1. Januar 1985 (1985-01-01), Seiten 493-497, XP000602583 ISSN: 0031-9317
- DATABASE WPI Derwent Publications Ltd., London, GB; AN 1985-164335 XP002140495 & SU 1 131 438 A (MOSCOW LOMONOSOV UNIV), 30. Dezember 1984 (1984-12-30)
- BOVERIS A ET AL: "Chemiluminescence of Soybean Seeds: Spectral Analysis, Temperature Dependence and Effect of Inhibitors" PHOTOCHEMISTRY AND PHOTOBIOLOGY, Bd. 38, 1983, Seiten 99-104, XP000920611
- SLAWINSKA D AND SLAWINKI J: "Chemiluminescence of Cereal Products I. Kinetics, Activation Energy and Effect of Solvents" JOURNAL OF BIOLUMINESCENCE AND CHEMILUMINESCENCE, Bd. 12, 1997, Seiten 249-259, XP000920637

## Beschreibung

Die Erfindung betrifft ein Verfahren zur Bestimmung der Keimfähigkeit von Samenkömern, Insbesondere Getreidekömern, bei dem
a1) die Samenkörner mit Licht bestrahlt werden, die Bestrahlung beendet wird und wenigstens eine charakteristische Größe des Lichts, das von den Samenkömern nach Beendigung der Bestrahlung emittiert wird, gemessen wird; und/oder
a2) wenigstens eine charakteristische Größe des Lichts, das von den Samenkömern ohne äußere Anregung mit Licht emittiert wird, gemessen wird;
b) aus der/den gemessenen charakteristischen Größe/n auf die Keimfähigkeit geschlossen wird; und der Wassergehalt der Samenkörner gemessen wird.

Die erstgenannte Alternative (a1 und b) wird im folgenden auch kurz als "Messung der verzögerten Lumineszenz" bezeichnet, die zweitgenannte auch als "Messung der spontanen Lichtemission".

Diese Messverfahren sind aus der EP 0 430 150 A1 bekannt. Dort wird auch vorgeschlagen, das erstgenannte Messverfahren, also die Messung der verzögerten Lumineszenz, zur Bestimmung der Keimfähigkeit von Samenkörnern einzusetzen. Der erste experimentelle Nachweis der spontanen Lichtemission aus biologischen Material ist beispielsweise in der Veröffentlichung B. Ruth, F.A. Popp: Experimentelle Untersuchungen zur ultraschwachen Photonenemission biologischer Systeme, Z. Naturforsch. 31c (1976), näher beschrieben.

Die Erfindung ist auch auf eine Anlage zur Bestimmung der Keimfähigkeit von Samenkörnem, insbesondere Getreidekörnem gerichtet, mit einer Einrichtung zur Messung des von den Samenkörnern in einem oder mehreren Zeitintervallen emittierten Lichts, wobei die Einrichtung zur Messung der verzögerten Lumineszenz gegebenenfalls so ausgebildet ist, dass die Samenkömer vor dem/den Messzeitintervallen mit Licht bestrahlt werden.

Eine Anlage zur Messung der spontanen Emission aus biologischem Material ist aus der obengenannten Veröffentlichung von B. Ruth und F.A. Popp bekannt. Aus der DE 94 17 845 U1 ist eine entsprechende Anlage zur Messung der verzögerten Lumineszenz bekannt.

Die Erfindung ist schließlich auf die Verwendung einer Lichtemissions-Messeinrichtung und/oder einer Wassergehalt-Messeinrichtung zur Durchführung des - unten näher erläuterten - erfindungsgemäßen Verfahrens gerichtet.

Gegen Mitte der 70er Jahre wurde erstmalig experimentell nachgewiesen, dass pflanzliche und tierische Zellen fortwährend spontan Photonen emittieren (siehe die o.g. Veröffentlichung von B. Ruth und F.A. Popp). Die Intensität reicht von einigen wenigen bis zu einigen hundert Photonen/(s cm²) in einem Spektralbereich von wenigstens 300-800 nm. Die emittierte Energie liegt damit typischerweise bei 10⁻¹⁷ W. Es handelt sich hierbei nicht etwa um zufällig emittierte Lichtquanten stochastischen Ursprungs. Vielmehr folgt die Photonenzählstatistik einer Poisson-Verteilung, was ein Zeichen für kohärente Emission ist. Viele verschiedene Experimente haben gezeigt, dass die Biophotonen ein Abbild der Vorgänge in der Zelle geben. Jede Änderung im biologischen oder physiologischen Zustand eines lebenden Systems spiegelt sich in einer entsprechenden Änderung der Biophotonen-Emission wider. Auch wurden deutliche Hinweise dafür gefunden, dass die Kommunikation und Organisation von Zellen zumindest teilweise durch Biophotonen vermittelt wird.

Obwohl diese sog. spontane Emission (d. h. Eigenemission ohne äußere Anregung) ein für die Grundlagenforschung faszinierendes Phänomen darstellt, bereitet die geringe Intensität für gewerbliche Anwendungen gewisse Schwierigkeiten. Als vorteilhafter hat sich in diesem Zusammenhang die Messung der sog. verzögerten Lumineszenz gezeigt. Hierbei wird die Probe des biologischen Materials mit Licht angeregt (z. B. mit weißem Licht hoher Intensität über einen Zeitraum von 0,1 s bis 20 s). Dann wird die Bestrahlung schlagartig beendet. Danach beginnt die Messung. Erfasst werden also nicht aufgrund von Reflexion, sondern aus gespeicherter Energie emittierte Photonen. Die Intensität ist wesentlich größer (typischerweise um 1 bis 3 Größenordnungen) als im Fall der spontanen Emission. Bei Verwendung eines Nachweisgeräts mit ausreichend hoher Nachweiswahrscheinlichkeit ist es daher möglich, die Intensität als Funktion der Zeit - also die Abklingkinetik - zu messen. Experimente haben gezeigt, dass das Abklingen im wesentlichen einer hyperbolischen Funktion folgt, wie man es bei kohärenter Emission erwartet, und nicht etwa einem exponentiellen Zerfallsgesetz, das sich bei Zufallsprozessen - wie dem radioaktiven Zerfall - zeigt. Auch in der verzögerten Lumineszenz spiegeln die Struktur und die Dynamik des untersuchten biologischen Systems wider. Im folgenden wird daher der Begriff "Biophotonen-Messung" als Oberbegriff für die Messung sowohl der spontanen Emission wie der verzögerten Lumineszenz verwendet.

Bei einem weiteren Verfahren zur Ermittlung der Keimfähigkeit von Sojabohnen unter Nutzung der verzögerten Lumineszenz (Veselova T.V. et al; Delayed luminescence of air-dry soybean seeds as a measure of their viability; Physiologia Plantaru, Band 65 (1985), Selten 493-497 (XP000602583)) wird neben der bekannten Bestrahlung mit Licht und Messung der Lichtemission ohne äussere Anregung auch der Wassergehalt der Sojabohnen ermittelt.

Komplexe biologische Parameter - wie die Keimfähigkeit von Getreide - sind bis heute auf mikroskopischer Ebene noch kaum verstanden. Es hat sich jedoch gezeigt, dass die verzögerte Lumineszenz deutlich von der Keimfähigkeit abhängt, und daher prinzipiell eine Bestimmung der Keimfähigkeit einer Probe durch Messung des Abklingverhaltens und Vergleich von empirisch ermitteltem Abklingverhalten von Proben mit bekannter Keimfähigkeit möglich ist (siehe die o.g. EP 0 430 150 A1). Und zwar zeigen Samenkörner mit höherer Keimfähigkeit eine deutlich geringere Photonenemission unmittelbar nach Beendigung der Bestrahlung - also ein größeres Lichtspeichervermögen - als Samenkörner geringerer Keimfähigkeit.

Der Erfinder hat erkannt, dass die mit dem Verfahren gemäß der EP 0 430 150 A1 erzielbare Genauigkeit der Keimfähigkeitsbestimmung für praktische Anwendungen nicht voll befriedigend ist. Er hat sich daher die Aufgabe gestellt, die Genauigkeit des bekannten Verfahrens zur Keimfähigkeitsbestimmung zu verbessern und dabei dessen Vorteile gegenüber anderen bekannten Keimfähigkeitsbestimmungsverfahren - wie etwa die Kürze der zur Bestimmung benötigten Zeit - beizubehalten. Es sei angemerkt, dass die obige Beschreibung nicht nur als eine Beschreibung des Standes der Technik anzusehen ist. Vielmehr beschreibt sie bereits Elemente der unten weiter erläuterten Erfindung.

Der Erfinder hat erkannt, dass das Abklingverhalten der verzögerten Lumineszenz nicht nur von der hier interessierenden Keimfähigkeit abhängt, sondern auch vom Wassergehalt der Samenkörner. Da zu untersuchende Proben von Samenkörner sich in der Praxis von Fall zu Fall in ihrem Wassergehalt stark unterscheiden können, liegt hierin der Hauptgrund für die nicht befriedigende Genauigkeit des Ausgangsverfahrens gemäß EP 0 430 150 A1.

Neben der verzögerten Lumineszenz wird auch der Wassergehalt der Samenkörner gemessen und erfindungsgemäss ist das eingangs genannte Verfahren dadurch gekennzeichnet, dass der gemessene Wassergehall bei der Bestimmung der Keimfähigkeit aufgrund der Messung der verzögerten Lumineszenz berücksichtigt wird, so dass deren Abhängigkeit vom Wasserhalt im wesentlichen korrigiert wird.

Obwohl die Messung der verzögerten Lumineszenz bevorzugt ist, ist die Erfindung nicht hierauf beschränkt. Denn grundsätzlich kann die Keimfähigkeit auch aus der Messung der spontanen Emission bestimmt werden. Auch hier trägt eine Messung des Wassergehalts samt entsprechender Korrektur des Lichtmessergebnisses zur Erhöhung der Genauigkeit bei. Auch eine Kombination der Messungen von verzögerter Lumineszenz und spontaner Emission liegt im Rahmen der Erfindung.

Die konkrete Abbildungsfunktion, die einen Schluss aus der Licht- und Wassergehaltsmessung auf die Keimfähigkeit erlaubt, ist theoretisch nicht bekannt und unterscheidet sich von Saatgutsorte zu Saatgutsorte. Sie wird daher auf empirischem Weg ermittelt. Hierzu wird die Lichtemission (verzögerte Lumineszenz und/oder ggf. spontane Emission) für verschiedene Proben mit unterschiedlichen, jeweils bekannten Werten der Keimfähigkeit und des Wassergehalts bestimmt. Mit den üblichen Approximations- und Interpolationsverfahren der numerischen Mathematik werden an diese Messwerte stetige Funktionen angepasst ("gefittet"). Die Kenntnis dieser Funktionen lässt bei einer Probe unbekannter Keimfähigkeit anhand der Messung der Biophotonen und des Wassergehalts den erstrebten Rückschluss von dem Ergebnis der Lichtmessung auf die Keimfähigkeit der Probe zu.

Vorrichtungsmässig stellt die Erfindung eine Anlage zur Bestimmung der Keimfähigkeit von Samenkörnern der eingangs erwähnten Art bereit, die eine Einrichtung zur Messung des Wassergehalts der Samenkörner beinhaltet, die gekennzeichnet ist durch eine Auswerteeinrichtung, welche aus dem gemessenen emittierten Licht unter Berücksichtigung des gemessenen Wassergehalts die Keimfähigkeit der Samenkörner bestimmt.

Die Erfindung stellt erstmalig die Möglichkeit bereit, die Keimfähigkeit mit hoher Genauigkeit innerhalb sehr kurzer Zeit (z. B. innerhalb weniger Minuten) bestimmen zu können. Hingegen dauert bei herkömmlichen, nicht auf Biophotonenmessung beruhenden Verfahren die Bestimmung der Keimfähigkeit im allgemeinen mehrere Stunden. Die Erfindung stellt daher einen bedeutenden Fortschritt auf dem Gebiet der Agrar- und Lebensmitteltechnologie dar. Sie ist damit von hoher sozialer Nützlichkeit.

In den abhängigen Patentansprüchen sind vorteilhafte Ausgestaltungen angegeben.

Gemäß Anspruch 2 erfolgt bei der Messung der verzögerten Lumineszenz die Bestrahlung der Getreidekörner vorzugsweise durch einen oder mehrere Lichtpulse (Anspruch 2). Die Dauer eines Lichtpulses liegt beispielsweise zwischen 0,1 s und 20 s, vorzugsweise zwischen 1 s und 10 s. Als Lichtquelle für weißes Licht kann beispielsweise eine HalogenLampe mit einer Leistung von typischerweise 100 bis 200 W dienen. Zur Erzeugung der Lichtpulse kann zwischen die Lichtquelle und die zu bestrahlende Probe ein mechanisch wirkender Verschluss geschaltet sein, mit dem der Lichtzutritt schlagartig d.h. z.B. in einem Zeitraum von 30 ms unterbrochen werden kann.

Aufgrund der relativ geringen Intensitäten werden bei Biophotonen-Messungen (verzögerte Lumineszenz und spontane Emission) im allgemeinen einzelne Photonen gezählt, wobei sich allerdings zwecks Erzielung einer möglichst hohen Empfindlichkeit nicht vermeiden lässt, dass ein (in der Regel vernachlässigbarer) Anteil der Zählimpulse Untergrundsignale sind, die nicht von Biophotonen herrühren. Ein derartiges Photonenzählsignal kann - abhängig von der Zahl der im Messintervall gemessenen Impulse und vom Untergrundanteil - einen statistischen Fehler aufweisen. Zur Verringerung des statistischen Fehlers werden die der Messwerterlangung dienenden Schritte vorzugsweise mehrfach nacheinander ausgeführt (Anspruch 3). Bei der verzögerten Lumineszenz hat eine Messreihe also beispielsweise folgende Abfolge: Bestrahlung mit Lichtpuls - Messung des Lumineszenzlichts - Bestrahlung mit Lichtpuls - Messung des Lumineszenzlichts ... Bei einer Messung der spontanen Emission kann die Zählung der Meßimpulse in einem bestimmten Zeitintervall mehrmals hintereinander durchgeführt werden. Die Zusammenfassung der mehreren Messergebnisse zwecks Verringerung des statistischen Fehlers kann auf unterschiedliche Arten und Weisen erfolgen: eine bevorzugte Möglichkeit besteht darin, aus den mehreren Lichtmessergebnissen einen Mittelwert (bzw. einen Satz von Mittelwerten) zu errechnen und hieraus die Keimfähigkeit zu bestimmen. Eine andere, denkbare Möglichkeit besteht darin, zunächst aus jeder Einzelmessung einen Wert für die Keimfähigkeit zu bestimmen und anschließend eine Mittelung der so bestimmten Werte vorzunehmen.

Gemäß Anspruch 4 werden bei der Messung der verzögerten Lumineszenz vorteilhaft eine oder mehrere der folgenden Größen gemessen:
a) Bevorzugt wird der Intensitätswert des in dem ersten Messzeitintervall, unmittelbar nach Beendigung der Lichtbestrahlung emittierten Lichts gemessen. Um sicherzustellen, dass sich der Verschluss völlig geschlossen hat und keine direkt reflektierten Photonen in den Lichtsensor gelangen, kann zwischen dem Steuerbefehl zum Schließen des Verschlusses und den Beginn des ersten Messzeitintervalls ein Wartezeitintervall geschaltet, das z. B. zwischen 50 und 150 ms betragen kann. Üblicherweise wird der Intensitätswert durch die Anzahl der registrierten Photonen angegeben, welche der Anzahl der im Messzeit-Intervall aufgetretenen Zählimpulse abzüglich der mittleren Anzahl von durch den Untergrund hervorgerufenen Impulsen ist. Dieser Wert wird im folgenden "NB1" genannt. Bei hoher Keimfähigkeit klingt die Lumineszenz langsamer ab als bei geringer Keimfähigkeit, so dass die im ersten Messzeitintervall registrierte Photonenzahl - bezogen auf die insgesamt emittierte Photonenzahl - geringer als bei niedriger Keimfähigkeit ist. Die Dauer eines Messzeitintervalls beträgt z. B. von 1 ms bis 10 s, vorzugsweise von 5 ms bis 200 ms, besonders vorzugsweise in der Größenordnung von 10 bis 100 ms.
b) Eine ähnliche, aber nur mit etwas aufwendigerer Messung uns Auswertung zu erlangende Messgrösse ist die Abklingkonstante einer hyperbolischen Zerfallsfunktion, die an die, nach Beendigung der Bestrahlung mit der zeitabnehmenden Lichtintensität angepasst ist. Diese Messgrösse wird mit "aH" bezeichnet.
c) Eine weitere mögliche Messgrösse ist die Abweichung der gemessenen abklingenden Lichtintensität von der bestangepassten hyperbolischen Zerfallsfunktion, im folgenden "ChiH" genannt.
d) Eine weitere mögliche Messgrösse ist die Abweichung der gemessenen abklingenden Lichtintensität von der bestangepassten exponentiellen Zerfallsfunktion, im folgenden "ChiE" genannt.
e) Während die obengenannten Messgrössen die Dynamik des Abklingens der Anregung charakterisieren, erhält man eine "statische" Messung der verzögerten Lumineszenz durch Bildung des Mittelwerts oder der Summe der ersten X Messwerte der Lichtintensität nach Beendigung der Lichtbestrahlung, wobei X eine vorbestimmte Zahl darstellt, die vorzugsweise so groß ist, dass sie einen wesentlichen Teil des Zerfalls der Anregung umfasst. Beispielsweise kann es sich um die Messung der zehn ersten Intervalle ä 10 ms handeln. Hiermit wird praktisch über den Zerfall integriert, man erfasst also näherungsweise die Gesamtstärke der verzögerten Lumineszenz. Diese Messgrösse wird mit "NB" bezeichnet.
f) Zur Erfassung des spontanen Zerfalls wird vorzugsweise die Intensität des ohne äußere Anregung in einem bestimmten Messzeitintervall emittierten Lichts gemessen. Diese Größe wird mit "DA" bezeichnet.

Ein einfaches und dennoch aussagekräftiges Verfahren beruht - wie oben bereits erwähnt wurde - allein auf der Messung der Größe NB1. Zwecks Erzielung einer höheren Genauigkeit kann es aber vorteilhaft sein, mehrere der obengenannten Größen zu messen und zu kombinieren. Beispielsweise kann man durch Bildung des Verhältnisses von NB1 und NB systematische Fehler der Absolutmessung der Lichtintensität weitgehend eliminieren. Für eine noch weitergehende Zusammenfassung mehrerer der genannten Messgrössen wendet man vorteilhaft ein multivariates Analyseverfahren nach der in der EP 0 430 150 A1 beschriebenen Art an, welches die Korrelation der einzelnen Größen berücksichtigt. Hierdurch holt man in optimaler Weise Information aus den gemessenen Werten heraus, kann also mit größtmöglicher Genauigkeit die Keimfähigkeit bestimmen. Die Korrelationen der einzelnen Messgrössen können - entsprechend den obigen Erläuterungen - auf empirischem Wege ermittelt werden. Eine Kombination der Messung der verzögerten Lumineszenz mit derjenigen der spontanen Emission ist möglich; wegen der größeren Intensität - und damit besseren Statistik - werden jedoch reine Lumineszenzmessungen bevorzugt.

Der Erfinder hat ferner erkannt, dass die Biophotonen-Emission neben der Wassergehalt-Abhängigkeit auch eine deutliche Temperatur-Abhängigkeit zeigt. Letztere Abhängigkeit ist jedoch weniger kritisch, da in der Praxis in einem Untersuchungslabor die Umgebungstemperatur meist nur geringe Schwankungen zeigt, so dass auch ohne Berücksichtigung dieser Abhängigkeit eine relativ genaue und gut reproduzierbare Keimfähigkeitsbestimmung möglich ist. Dennoch ist es zur Erhöhung der Genauigkeit und Reproduzierbarkeit vorteilhaft, bei der Untersuchung die Temperatur der Samenkörner zu messen oder sie auf einen bekannten Wert einzustellen, und bei der Bestimmung der Keimfähigkeit den gemessenen bzw. eingestellten Temperaturwert zu berücksichtigen (Anspruch 5). Hierdurch kann man die Abhängigkeit der gemessenen Größen des emittierten Lichts von der Temperatur im wesentlichen korrigieren.

Die erfindungsgemäße Anlage ist vorzugsweise so ausgestaltet, dass die Einrichtung zur Lichtemissionsmessung eine gegen Fremdlicht abgedichtete Messkammer zur Aufnahme der zu untersuchenden Samenkörner, wenigstens einen Lichtsensor und gegebenenfalls - zur Durchführung von Messungen der verzögerten Lumineszenz - eine Lichtquelle aufweist, wobei der Zutritt des Lichts von der Lichtquelle in die Messkammer schlagartig unterbrochen werden kann (Anspruch 7).

Bei dem Lichtsensor handelt es sich vorzugsweise um einen, auf einzelne Photonen ansprechenden Photomultiplier (Anspruch 8). Der Photomultiplier wird vorzugsweise mit so hoher Empfindlichkeit betrieben, dass er für in seinen Nachweisraumwinkel einfallende Photonen im Bereich von 300 bis 800 nm eine Nachweiswahrscheinlichkeit von vorteilhaft wenigstens 60%, vorzugsweise wenigstens 70% und besonders vorzugsweise wenigstens 80% hat.

Zur Bestimmung des Wassergehalts von Getreidekörnern sind verschiedene Vorrichtungen und Verfahren bekannt. Eine klassische Methode besteht etwa darin, die Getreidekörner zu zermahlen, zu trocknen, durch Wägung den Gewichtsverlust zu bestimmen und hieraus auf den Wassergehalt zu schließen. Dieser Vorgang dauert jedoch mehrere Stunden. Eine instantane Wassergehaltsbestimmung ist hingegen durch eine Infrarot-Reflexionsmessung möglich. Wasser absorbiert nämlich stark im Bereich des nahen Infrarotlichts (z.B. im Bereich von 4000 bis 10 000 nm). Die Reflexion von Infrarotlicht durch die Samenkörner nimmt also mit steigendem Wassergehalt ab. Vorzugsweise ist die Wassergehalt-Messeinrichtung daher eine Infrarotreflexions-Messeinrichtung (Anspruch 9). Eine Normierung der gemessenen Reflexion kann durch Vergleich mit dem Spektrum einer trockenen Referenzprobe oder durch Bezugnahme auf einen Teil des Reflexionsspektrums, der nicht vom Wassergehalt beeinflusst wird, erfolgen.

Obwohl grundsätzlich Teile der Auswertung "von Hand" vorgenommen werden können, ist die Auswerte-Einrichtung vorzugsweise ein geeignet programmierter Computer (Anspruch 10). Hiermit lässt sich die Keimfähigkeitsbestimmung weitgehend automatisch durchführen, ohne dass hierfür besonders qualifiziertes Bedienungspersonal erforderlich wäre.

Grundsätzlich können die Lichtemissions-Messeinrichtung und die Wassergehalt-Messeinrichtung gesonderte Vorrichtungen sein (Anspruch 11). Zwecks leichterer Bedienbarkeit und Verringerung des apparativen Aufwands weisen die beiden Messeinrichtungen jedoch vorzugsweise ein oder mehrere gemeinsame Teile auf. Besonders vorteilhaft sind sie in einer gemeinsamen Vorrichtung vereinigt (Anspruch 12).

Bei den gemeinsamen Teilen kann es sich vorzugsweise um eines oder mehrere der folgenden Teile handeln: Messkammer, Lichtquelle, Lichtleiter, Lichtsensor, Messeinrichtungs-Steuerung, Auswerte-Einrichtung (Anspruch 13). Hierzu ist folgendes anzumerken: eine gemeinsame Messkammer erleichtert die Bedienung, da die Probe nun nur noch an einem Messplatz angeordnet zu werden braucht. Übliche Weißlichtlampen sind so breitbandig, dass sie auch ausreichend im nahen Infrarot emittieren. Man kann also eine gemeinsame Lichtquelle verwenden, wobei gegebenenfalls bei der Wassergehalt-Messung zwischen Lichtquelle und Probe ein Infrarotfilter und/oder bei der Biophotonen-Messung ein Filter für sichtbares Licht eingesetzt wird. Um hinsichtlich der Anordnung der Lichtquelle relativ zur Probe nicht allzu großen Beschränkungen zu unterliegen, führt man das Licht vorteilhaft mit einem gemeinsam benutzten Lichtleiter von der Quelle zur Probe, wobei auch eine Einkopplung von zwei (nicht gemeinsamen) Lichtquellen in den Lichtleiter möglich ist. Da das Infrarotlicht nicht etwa verzögert, sondern in direkter Reflexion gemessen wird, liegt die Infrarotintensität um viele Größenordnungen über der Intensität der verzögert emittierten Biophotonen. Mit einer entsprechenden Umschaltung des Verstärkungsgrads ist es dennoch möglich, ein- und denselben Lichtsensor sowohl für die Wassergehalts-Messung wie auch die Biophotonen-Messung zu verwenden. Schließlich ist es im Hinblick auf eine einfache Bedienbarkeit, eine weitgehende Automatisierung und eine Verringerung des Programmieraufwands vorteilhaft, eine gemeinsame Steuer- und Auswerteeinrichtung für beide Messeinrichtungen vorzusehen.

Die Erfindung wird nun anhand von Ausführungsbeispielen und der angefügten Zeichnung näher beschrieben. In der Zeichnung zeigen:
- Fig. 1: Infrarot-Reflexionsspektren von Gerstenkörnern für verschiedene Wassergehalt-Werte, als Funktion der Wellenlänge;
- Fig. 2: eine schematische Darstellung der Abklingfunktion (d. h. der Lichtintensität als Funktion der Zeit) bei verzögerter Lumineszenz;
- Fig. 3: einen empirisch ermittelten Zusammenhang zwischen NB1 und der Keimfähigkeit für Gerste der Sorte "Madras";
- Fig. 4: eine Darstellung gemäß Fig. 3, jedoch für Gerste der Sorte "Chariot";
- Fig. 5: einen empirisch ermittelten Zusammenhang zwischen NB1 und dem Wassergehalt für Gerste der Sorte "Chariot";
- Fig. 6: ein empirisch ermittelter Zusammenhang zwischen NB1 und der Temperatur für Gerste der Sorte "Madras";
- Fig. 7: eine schematische Darstellung einer Anlage zur Keimfähigkeitsbestimmung, bei der die Biophotonen-Messeinrichtung und die Wassergehalt-Messeinrichtung durch gesonderte Vorrichtungen gebildet sind;
- Fig. 8: eine schematische Darstellung einer Anlage zur Keimfähigkeitsbestimmung, bei der die Biophotonen-Messeinrichtung und die Wassergehalt-Messeinrichtung in einer gemeinsamen Vorrichtung vereinigt sind.

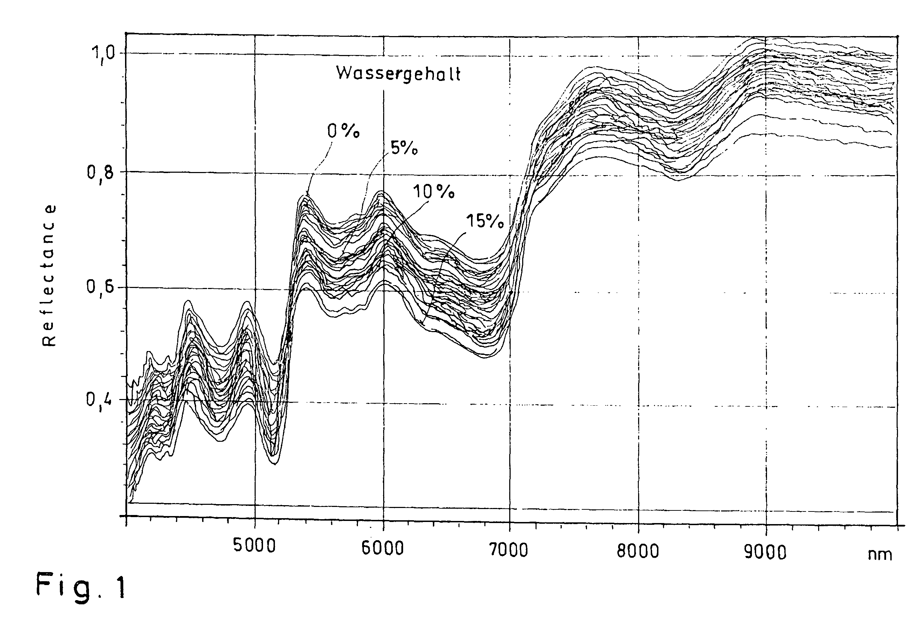

Fig. 1 zeigt das Reflexionsvermögen von Proben von Gerstenkörnern für verschiedene Werte des Wassergehalts als Funktion der Wellenlänge des reflektierten Lichts im Bereich des nahen Infrarots (hier: 4000 bis 10 000 nm). Man sieht, dass über den gesamten Wellenlängenbereich hinweg das Reflexionsvermögen durch zunehmendem Wassergehalt zunehmend verringert wird. Die gezeigten Reflexionsspektren wurden empirisch unter Verwendung von Proben mit bekanntem Wassergehalt gewonnen. Bei einer Messung lässt sich der unbekannte Wassergehalt einer Probe ermitteln, indem man ein entsprechendes Infrarotspektrum aufnimmt und es durch Vergleich einem der empirisch ermittelten Referenzspektren gemäß Fig. 1 zuordnet. Der diesem Spektrum zugehörige Wassergehalt entspricht dann mit relativ hoher Genauigkeit dem gesuchten Wassergehalt der zu untersuchenden Probe.

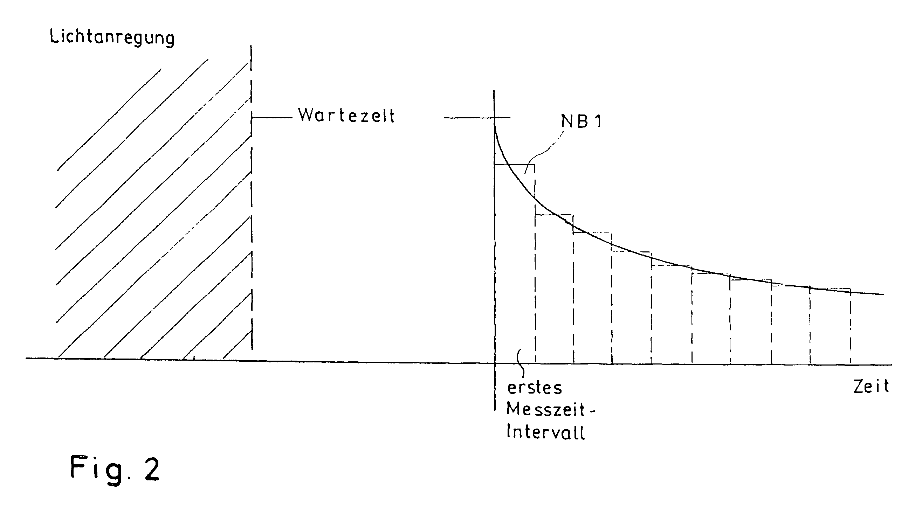

Fig. 2 zeigt schematisch die Dynamik der Biophotonen-Emission bei der verzögerten Lumineszenz. Dargestellt ist die Intensität des von den Samenkörnern emittierten Lichts als Funktion der Zeit, wobei die Messung - und damit die gezeigte Kurve - unmittelbar nach Beendigung der Lichtbestrahlung und eines Wartezeitintervalls (z. B. 100 ms) beginnt. Die Abklingfunktion folgt näherungsweise einem hyperbolischen Zerfallsgesetz. Die dargestellte Abklingfunktion ist die Wahrscheinlichkeitsdichte, also diejenige Kurve, die man bei einer Messung mit sehr hoher Statistik erzielte. Wegen der relativ geringen Intensität misst man die Abklingfunktion in der Praxis aber nicht mit der gezeigten Zeitauflösung. Vielmehr bildet man eine Abfolge endlicher Zeitintervalle von typischerweise jeweils 1 bis 200 ms Dauer, und zählt die in jedem Zeitintervall nachgewiesenen Photonen. Ein entsprechendes Histogramm ist in Fig. 2 ebenfalls dargestellt. Die tatsächlich gemessenen Inhalte der einzelnen Histogramm-Bins weichen von der Wahrscheinlichkeitsdichte der Abklingfunktion aufgrund statistischer Schwankungen ab. Ferner enthalten sie einen Untergrundanteil, dessen Mittelwert empirisch messbar und somit von dem gemessenen Signal abziehbar ist, jedoch die statistische Schwankung des verbleibenden Signals erhöht. Der im ersten Messintervall von z. B. 10 ms Dauer liegende Intensitätswert ist der sog. NB1-Wert, welche für eine einfache und schnelle Keimfähigkeitsbestimmung ausreichend Information trägt. Durch Anpassen einer Hyperbelfunktion (d. h. einer Funktion proportional zu 1/Zeit) an das Histogramm lässt sich beispielsweise in Form der Proportionalitätskonstanten das Maß aH für die Abklingzeit gewinnen. Aus der Fehlerabweichung der gemessenen Lichtintensität von der gezeigten bestangepassten hyperbolischen Zerfallsfunktion gewinnt man die Fehlergröße ChiH. Entsprechend gewinnt man die Fehlergröße ChiE aus der Fehlerabweichung der gemessenen abklingenden Lichtintensität von der (nicht gezeigten) bestangepassten exponentiellen Zerfallsfunktion. Ein Maß für die gesamte Lumineszenzenergie, NB. erhält man durch Aufsummieren der Inhalte einer größeren Zahl der ersten Histgramm-Bins, beispielsweise der ersten 10 Bins. Der asymptotische Intensitätswert entspricht schließlich der Intensität der DA der spontanen Emission.

Bei einer Einheitsküvette mit einem Volumen von 10 ml werden im ersten 10-ms-Zeitintervall nach Beendigung der Bestrahlung und der Wartezeit typischerweise 500 Zählimpulse beobachtet. Mit leerer Küvette beobachtet man im gleichen Zeitintervall typischerweise 50 Zählimpulse, welche teils Rauschen darstellen, teils von einer verzögerten Emission aus den Kammerwänden und der leeren Küvette herrühren können. Nach Abziehen des mittleren Untergrunds erhält man also typischerweise einen NB1-Wert von 450 Impulsen pro 10 ms. Es handelt sich hierbei um grobe Anhaltswerte; je nach Getreidesorte, Keimfähigkeit, Feuchtigkeit und Temperatur können deutlich größere oder kleinere Werte auftreten.

Qualitativ lässt sich der Zusammenhang zwischen der Größe NB1 bei der verzögerten Lumineszenz und der Keimfähigkeit so darstellen, dass NB1 mit zunehmender Keimfähigkeit abnimmt. Entsprechendes gilt für den Wassergehalt: NB1 nimmt mit zunehmendem Wassergehalt ab. Ein entsprechender Zusammenhang zeigt sich schließlich mit der Temperatur, und zwar nimmt NB1 mit steigender Temperatur ab.

Bei der spontanen Emission sind diese Zusammenhänge umgekehrt: Hier nimmt DA mit zunehmender Keimfähigkeit, zunehmendem Wassergehalt und zunehmender Temperatur zu.

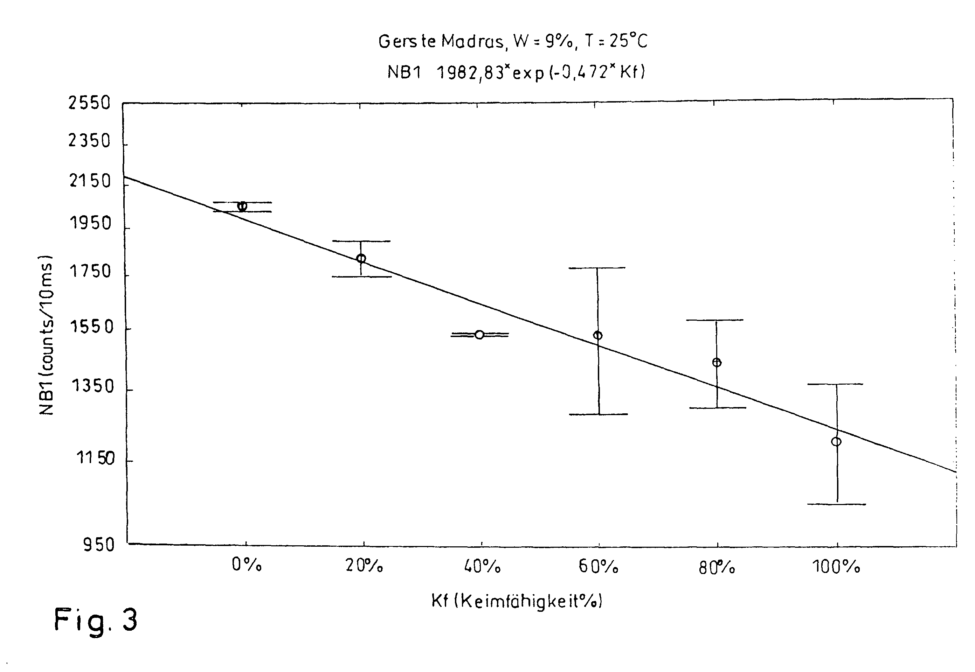

Fig. 3 zeigt beispielhaft für eine Gerstensorte ("Madras") den Zusammenhang zwischen NB1 und Keimfähigkeit, der empirisch durch Verwendung verschiedener Proben mit unterschiedlicher, jeweils bekannter Keimfähigkeit gewonnen wurde. Der Wassergehalt und die Temperatur der verschiedenen Proben waren mit 9 Gewichts-% bzw. 25° C jeweils gleich. Der Zusammenhang zwischen NB1 und der Keimfähigkeit Kf lässt sich gut durch eine exponentiell abnehmende Funktion NB1 = c1 x exp(-c2 x Kf) beschreiben, welche in der Figur aufgrund der logarithmischen Teilung der Ordinate als Gerade erscheint.

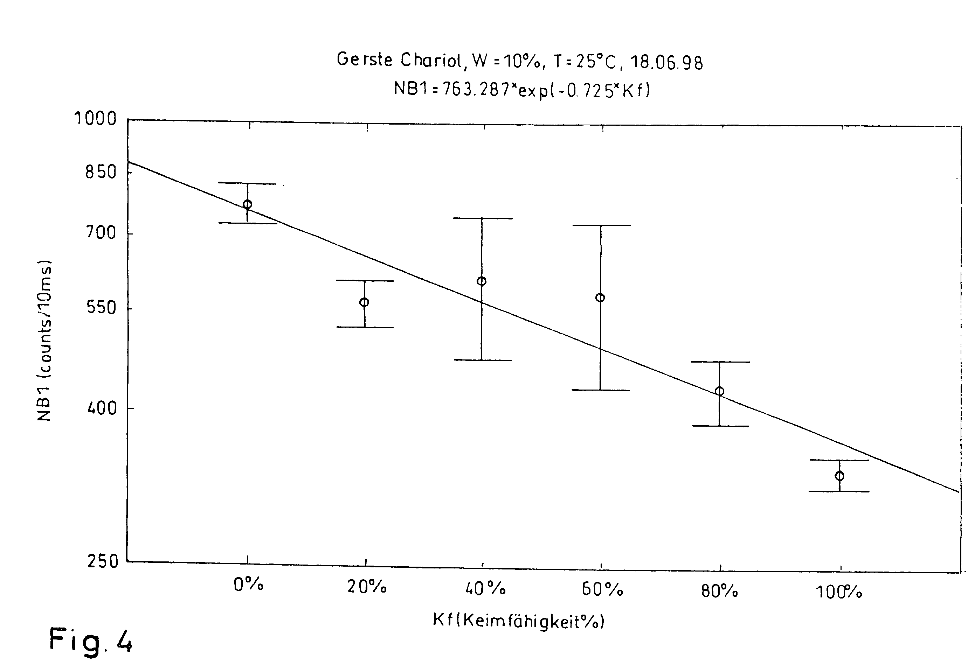

Ein entsprechendes Diagramm zeigt Fig. 4 für eine andere Gerstensorte (Chariot) bei einem etwas größeren Wassergehalt (10%). Es zeigen sich hier ungefähr dreimal kleinere NB1-Werte.

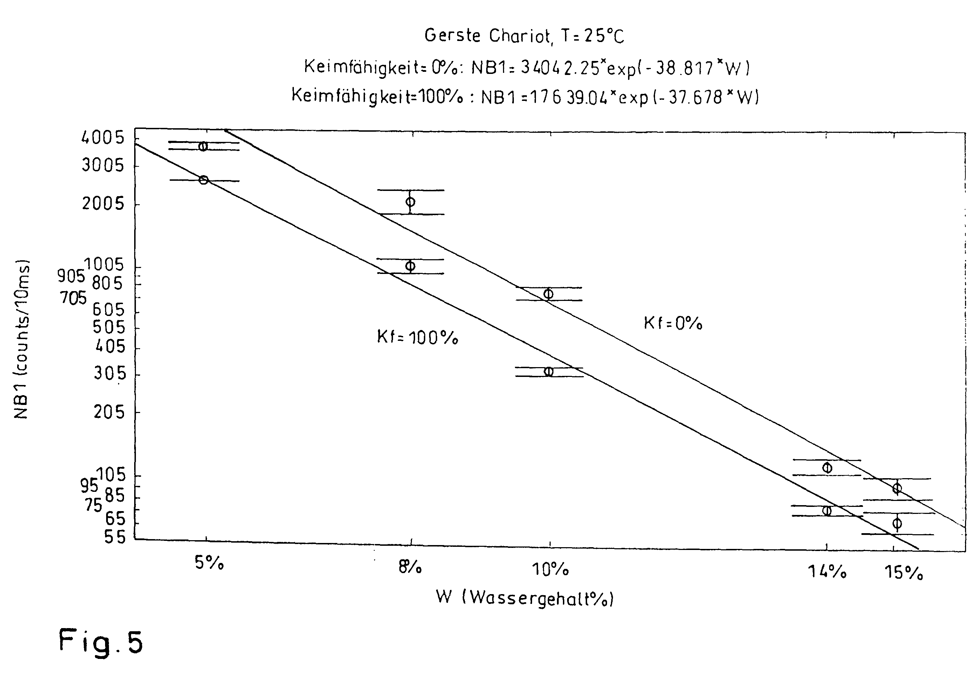

Fig. 5 zeigt empirisch ermittelte Zusammenhänge zwischen NB1 und dem Wassergehalt W bei Gerste "Chariot", und zwar jeweils für die Extremfälle einer Keimfähigkeit von 0% und von 100%. Der Zusammenhang ist in beiden Fällen wiederum durch eine abnehmende Exponentialfunktion, also durch NB1 = c3 x exp(-c4 x W) darstellbar. Die Tatsache, dass die Konstanten c4 für die beiden Fälle extrem unterschiedlicher Keimfähigkeit nahezu gleich sind, also die in Fig. 5 als Geraden erscheinenden Exponentialfunktionen nahezu parallel verlaufen, bedeutet, dass die relative Abhängigkeit der Größe NB1 vom Wassergehalt W nahezu unabhängig von der Keimfähigkeit ist. In anderen Worten sind die Einflüsse der Keimfähigkeit und des Wassergehalts auf die Größe des NB1 multiplikativ separierbar, also in Form eines Produkts zweier Exponentialfunktionen, von denen eine von der Keimfähigkeit, die andere von Wassergehalt abhängt, darstellbar.

Die Bestimmung der Keimfähigkeit aus gemessenem NB1 und Wassergehalt kann also in einfacher Weise durch folgende zwei Schritte erfolgen:
i) Zunächst wird aus dem gemessenen NB1 und dem gemessenen Wassergehalt errechnet, welcher Wert für NB1 bei einem Standardwassergehalt gemessen worden wäre. Beispiel: bei Gerste Chariot wurde ein NB1-Wert von 105 counts/10ms und ein Wassergehalt von 14% gemessen. Mit der anhand Fig. 5 bestimmten Konstante c4 lässt sich hieraus ein standardisierter NB1-Wert von ungefähr 470 counts/10ms bei einem Standard-Wassergehalt von 10% errechnen.
ii) Aus dem so standardisierten NB1-Wert kann man mit Hilfe der Umkehrfunktion der empirisch ermittelten Abhängigkeiten nach Art der Fig. 3 und 4 direkt die Keimfähigkeit ermitteln. Beispiel: dem standardisierten NB1-Wert von 470 counts/10ms entspricht eine Keimfähigkeit von ungefähr 60%, wie man Fig. 4 direkt entnehmen kann.).

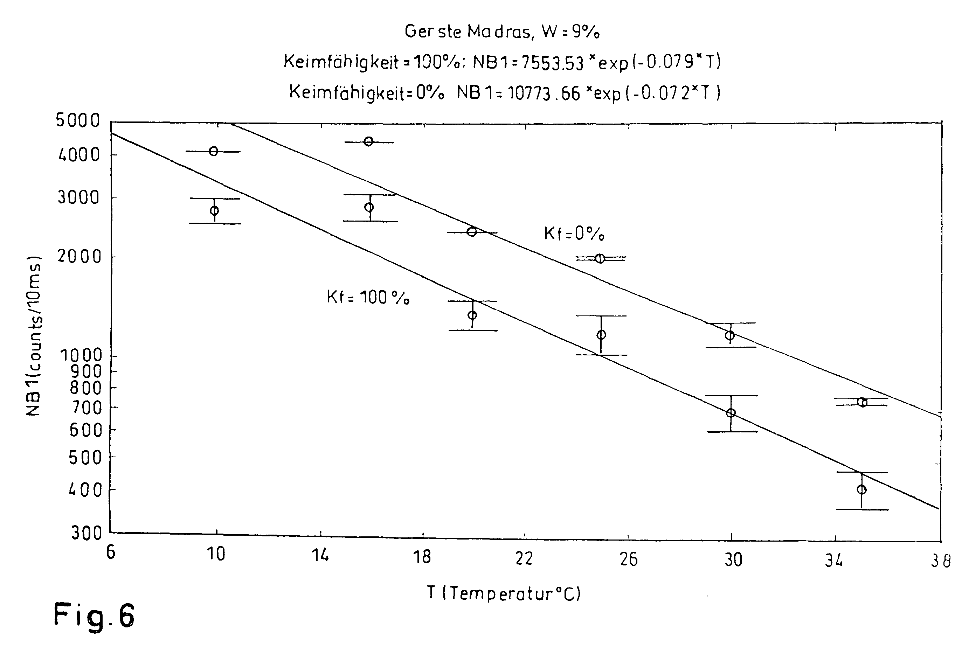

Wie Fig. 6 zeigt, findet sich eine entsprechende Abhängigkeit des NB1-Werts von der Temperatur T der zu untersuchenden Samenkörner. Auch hier zeigt sich ein entsprechender exponentieller Zusammenhang, wobei wiederum die im Exponenten stehenden Koeffizienten für die Extremfälle einer Keimfähigkeit von 0% bzw. 100% annähernd gleich sind. In Fig. 6 zeigt sich dies wiederum an dem nahezu parallelen Verlauf der beiden, als Geraden erscheinenden Exponentialfunktionen. Damit ist auch die Temperaturkorrektur multiplikativ separierbar. NB1 lässt sich demnach als Produkt dreier Exponentialfunktionen darstellen, von denen eine als Variable im Exponenten die Keimfähigkeit, die zweite den Wassergehalt und die dritte die Temperatur aufweist. Die Temperaturkorrektur erfolgt analog den obigen Ausführungen zur Wassergehalts-Korrektur, indem der gemessene NB1-Wert auf denjenigen NB1-Wert umgerechnet wird, der bei Standardtemperatur (z. B. 25°C) gemessen worden wäre.

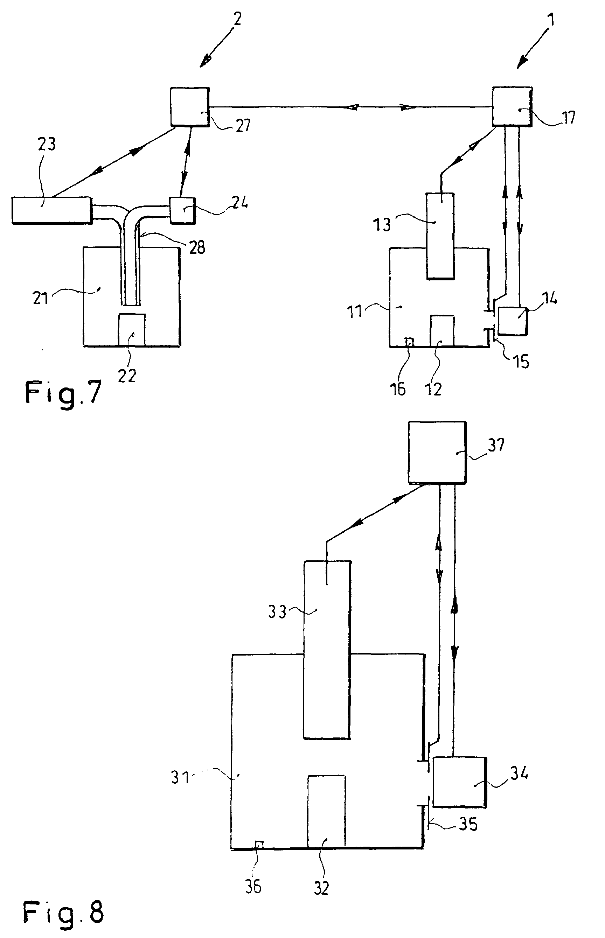

Fig. 7 zeigt eine Anlage zur Bestimmung der Keimfähigkeit, bei der die Biophotonen-Messeinrichtung und die Wassergehalt-Messeinrichtung durch zwei gesonderte Vorrichtung 1,2 gebildet sind.

Die beiden Vorrichtungen 1,2 sind in vereinfachter Form dargestellt. Eine geeignete Vorrichtung zur Messung von Biophotonen ist in dem eingangs genannten Gebrauchsmuster DE 94 17 845 U1 im Zusammenhang mit dem dortigen Ausführungsbeispiel 1 (dortige Fig. 3) ausführlich dargestellt. Die Offenbarung der DE 94 17 845 U1, insbesondere des Ausführungsbeispiels 1 samt Fig. 3, wird daher ausdrücklich zum Gegenstand der vorliegenden Anmeldung gemacht. Eine geeignete Vorrichtung zur Bestimmung des Wassergehalts von Getreide auf der Grundlage einer Infrarotreflexionsmessung wird beispielsweise von der Bühler AG, Uzwil unter dem Produktnamen Nirvis vertrieben.

Die in Figur 7 gezeigte Biophotonen-Messeinrichtung 1 weist eine lichtdicht geschlossene Messkammer 11 auf, in der ein Probenhalter 12 zur Aufnahme einer Probe, z.B. einer mit Getreidekörnern gefüllten Küvette angeordnet ist. Von der Probe emittierte, einzelne Photonen werden von einem in die Messkammer 11 eingesetzten Lichtsensor 13 in Form eines empfindlichen, wenigstens teilweise gekühlten Photomultipliers detektiert. Durch eine Öffnung in der Messkammer 11 kann Licht von einer Lichtquelle 14 eintreten und auf die Probe treffen. Bei der Lichtquelle 14 handelt es sich z.B. um eine Halogenlampe, die beispielsweise eine Leistung von 100 bis 200 W aufweisen kann. Mit Hilfe eines Filters kann das eintretende Licht z.B. auf den sichtbaren Bereich des Spektrums beschränkt werden. Ein Verschluss 15 lässt im offenen Zustand Licht von der Lichtquelle 14 in die Messkammer 11 eintreten, im geschlossenen Zustand schließt er diese lichtdicht ab. Er benötigt für den Schließvorgang typischerweise ca. 30 ms. Ein Temperatursensor 16 dient der Messung und Konstanthaltung der Temperatur in der Messkammer 11. Ein Steuer- und Auswertegerät 17, z.B. ein geeignet programmierter Computer steuert den für die Messung der verzögerten Lumineszenz erforderlichen Ablauf. Die Lichtquelle 14 ist dabei permanent im Betrieb, die zeitliche Steuerung der Lichtanregung erfolgt allein durch den Verschluss 15. Zunächst wird dieser zwecks Lichtanregung der Probe für z.B. 5 s geöffnet. Während dieser Zeit ist der Photomultiplier 14 auf geringe Empfindlichkeit eingestellt (d.h. die der Elektronenbeschleunigung dienende Spannung ist relativ niedrig). Nach Ablauf dieser Anregungszeit wird er schlagartig geschlossen, die Empfindlichkeit des Photomultipliers 14 wird auf einen hohen Wert gestellt; nach Ablauf einer Wartezeit von beispielsweise 100 ms beginnt die Photonenmessung. Bei dem - ebenfalls von dem Steuer- und Auswertegerät 17 durchgeführten Messvorgang werden jeweils in aufeinanderfolgenden Zeitintervallen von z.B. 10 ms Dauer die vom Photomultiplier gelieferten Impulse gezählt. Aus Messungen mit leerer Küvette ist der mittlere Untergrund in jedem Messintervall bekannt. Der im ersten Messintervall liegende Zählwert stellt - nach Subtraktion des mittleren Untergrunds - den Wert NB 1 dar, welcher für sich genommen eine einfache und relativ genaue Keimfähigkeitsbestimmung erlaubt. Durch Hinzuziehung der Messwerte aus späteren Messintervallen und durch Messung der spontanen Emission lässt sich die Genauigkeit noch erhöhen. Die - oben näher beschriebene Auswertung - wird ebenfalls vom Steuer- und Auswertegerät 17 vorgenommen.

Die in Figur 7 ebenfalls gezeigte Wassergehalt-Messeinrichtung 2 umfasst eine Quelle 24, die Licht im nahen Infrarotbereich emittiert. Das Infrarotlicht wird durch einen Lichtleiter 28 zu einem Probenhalter 22 in einer Messkammer 21 geführt. Der Lichtleiter 28 ist aus einem im inneren gelegenen Hinleiter und einem diesen konzentrisch umgebenden Rückleiter aufgebaut. Die Lichtquelle 24 speist in den Hinleiter ein. Das am Ende des Hinleiters austretende Infrarotlicht trifft auf die Probe und wird von dieser teilweise reflektiert, wobei der entsprechende Raumwinkelanteil in den Rückleiter eintritt und zu einem Infrarotsensor 23 geführt wird. Der Infrarotsensor 23 ist vorzugsweise als Spektrograph ausgebildet, um Spektren nach Art der Figur 1 gewinnen zu können. Ein Steuer- und Auswertegerät 25 steuert die Messung und ermittelt aus dem gemessenen Spektrum den Wassergehalt, beispielsweise durch Vergleich mit einem oder mehreren Referenzspektren. Der ermittelte Wassergehalt wird vom Steuer- und Auswertegerät 25 dem Steuer- und Auswertegerät 15 mitgeteilt, damit dieses den Wassergehalt als Korrektur bei der Keimfähigkeitsbestimmung auf Grundlage der Biophotonenmessung berücksichtigen kann. Auch die vom Temperatursensor 16 gemessene Temperatur kann zur Korrektur herangezogen werden.

Bei dem Ausführungsbeispiel der Figur 7 sind die beiden Messeinrichtungen 1, 2 - abgesehen von der Kommunikationsverbindung - gesonderte Einheiten. Bei anderen Ausführungsformen ist es möglich, eines oder mehrere Teile gemeinsam zu nutzen. Beispielsweise kann ein gemeinsames Steuer- und Auswertegerät für die Steuerung beider Messvorgänge und die gesamte Auswertung zuständig sein. Ferner kann beispielsweise eine gemeinsame Lichtquelle vorgesehen sein, deren Spektrum so breit ist, dass sie - nach entsprechender Filterung - sowohl eine Infrarotquelle wie auch eine Quelle von Licht im sichtbaren Bereich darstellt. Ein gemeinsamer Lichtleiter kann das Licht zur Probe führen.

Figur 8 zeigt schließlich die vorteilhafte Möglichkeit, beide Messeinrichtungen in einer Vorrichtung 3 zu integrieren. In einer gemeinsamen Messkammer 31 ist ein Probenhalter 32 vorgesehen, der zum Halten einer Probe für beide Messungen bestimmt ist. Eine gemeinsame Lichtquelle 34 liefert ausreichend breitbandiges Licht, aus dem durch (nicht gezeigte) umschaltbare Filter für die Wassergehaltmessung Infrarotlicht und für die Biophotonenmessung sichtbares Licht ausgefiltert wird. Die Messkammer 31 wird gegenüber der Lichtquelle durch einen Verschluss 35 abgeschlossen, dessen Funktion derjenigen des Verschlusses 15 von Figur 7 entspricht. Ein gemeinsamer Lichtsensor 33 kann nach entsprechender Einstellung seine Empfindlichkeit wahlweise die Intensität reflektierten Infrarotlichts messen oder einzelne Biophotonen zählen. Ein Temperatursensor 36 misst die Temperatur der Probe. Ein Temperatursensor 36 misst die Temperatur in der Messkammer 31. Bei einer (nicht gezeigten) Ausführungsform führt ein gemeinsamer Lichtleiter das Licht zur Probe. Ein gemeinsames Steuer- und Auswertegerät 37 sorgt für die Steuerung des Messablaufs und die Auswertung der bei beiden Messungen gewonnen Daten. Der Messablauf entspricht im wesentlichen dem im Zusammenhang mit Figur 7 beschriebenen. Hinzu kommt jedoch, dass die Filter zur Auswahl von Infrarot - oder sichtbaren Licht - und die jeweils erforderliche Empfindlichkeit des Lichtsensors 33 im Verlauf der Messung umgestellt werden.

Insgesamt erlaubt die Erfindung eine schnelle, einfache und genaue Bestimmung der Keimfähigkeit von Samenkörnern. Dies ist von grossem Vorteil in diversen Bereichen der Agrar- und Lebensmitteltechnologie.

Keimfähigkeit ist neben dem Wortsinn auch im Sinne der Bestimmung von Umwandlungsprozessen im Samen oder Getreidekorn (z.B. Verzuckerung oder die sog. Atmung) zu sehen. Angesichts der globalen Ernährungsprobleme ist die Erfindung damit von außerordentlicher sozialer Nützlichkeit.

## Patentansprüche

1. Verfahren zur Bestimmung der Keimfähigkeit von Samenkörnern, insbesondere Getreidekömern, bei dem
a1) die Samenkörner mit Licht bestrahlt werden, die Bestrahlung beendet wird und wenigstens eine charakteristische Größe des Lichts, das von den Samenkörnern nach Beendigung der Bestrahlung emittiert wird, gemessen wird; und/oder
a2) wenigstens eine charakteristische Größe des Lichts, das von den Samenkörnern ohne äußere Anregung mit Licht emittiert wird, gemessen wird;
b) aus der/den gemessenen charakteristischen Größe/n auf die Keimfähigkeit geschlossen wird,
und der Wassergehalt der Samenkörner gemessen wird,
**dadurch gekennzeichnet, dass**
der im Schritt b) gemessene Wassergehalt berücksichtigt und hierdurch die Abhängigkeit der charakteristischen Größe/n des emittierten Lichts vom Wassergehalt im wesentlichen korrigiert wird.

2. Verfahren nach Anspruch 1, bei dem die Bestrahlung der Samenkörner im Schritt a1) durch wenigstens einen Lichtpuls erfolgt.

3. Verfahren nach Anspruch 1 oder 2, bei welchem die der Messwerterlangung dienenden Schritte a1) und/oder a2) und/oder auch der Schritt b) mehrfach nacheinander ausgeführt werden und die hierdurch gewonnenen Ergebnisse zur Erhöhung der Genauigkeit des ermittelten Wertes der Keimfähigkeit zusammengefasst werden.

4. Verfahren nach einem der Ansprüche 1 bis 3, bei dem eine oder mehrere der folgenden charakteristischen Lichtgrößen gemessen werden:
- ein ermittelter Intensitätswert des in einem ersten Messzeitintervall nach Beendigung der Lichtbestrahlung emittierten Lichts (NB1);
- ein Maß für eine Abklingzeit einer hyperbolischen Zerfallsfunktion, die an eine nach Beendigung der Bestrahlung mit der Zeit abnehmende Lichtintensität angepasst ist (aH);
- ein Maß für die Abweichung einer gemessenen abklingenden Lichtintensität von der bestangepassten hyperbolischen Zerfallsfunktion (ChiH);
- ein Maß für die Abweichung einer gemessenen abklingenden Lichtintensität von der bestangepassten exponentiellen Zerfallsfunktion (ChiE);
- ein Mittelwert von X Messwerten der Lichtintensität nach Beendigung der Lichtbestrahlung, wobei X eine vorbestimmte Zahl ist (NB);
- die Intensität des ohne äußere Anregung emittierten Lichts (DA).

5. Verfahren nach einem der Ansprüche 1 bis 4, bei dem außerdem die Temperatur der Samenkörner gemessen oder auf einen bekannten Wert eingestellt wird, und der Temperaturwert im Schritt b) berücksichtigt wird und hierdurch die Abhängigkeit der gemessenen charakteristischen Größe/n des emittierten Lichts von der Temperatur im wesentlichen korrigiert wird.

6. Anlage zur Bestimmung der Keimfähigkeit von Samenkörnern, insbesondere Getreidekörnern,
mit einer Einrichtung (1, 3) zur Messung des von den Samenkörnern in einem oder mehreren Zeitintervallen emittierten Lichts, wobei die Einrichtung (1, 3) so ausgebildet ist, dass die Samenkörner vor dem/den Messzeitintervall/en mit Licht bestrahlt werden,
mit einer Einrichtung (2, 3) zur Messung des Wassergehalts der Samenkörner,
**gekennzeichnet durch**
eine Auswerte-Einrichtung (17, 27, 37), welche aus dem gemessenen emittierten Licht unter Berücksichtigung des gemessenen Wassergehalts die Keimfähigkeit der Samenkörner bestimmt.

7. Anlage nach Anspruch 6, bei welcher die Einrichtung zur Lichtemissionsmessung (1, 3) eine gegen Fremdlicht abgedichtete Messkammer (11, 31) zur Aufnahme der zu untersuchenden Samenkörner,
wenigstens einen Lichtsensor (13, 33) und
eine Lichtquelle (14, 34) aufweist, wobei der Zutritt des Lichts von der Lichtquelle (14, 34) in die Messkammer (11, 31) schlagartig unterbrochen werden kann.

8. Anlage nach Anspruch 7, bei welcher der Lichtsensor (13, 33) ein auf einzelne Photonen ansprechender Photomultiplier ist.

9. Anlage nach einem der Ansprüche 6 bis 8, bei welcher die Wassergehalt-Messeinrichtung (2, 3) eine Infrarotreflexion-Messeinrichtung ist.

10. Anlage nach einem der Ansprüche 6 bis 9, bei welcher die Auswerte-Einrichtung (17, 27, 37) ein geeignet programmierter Computer ist.

11. Anlage nach einem der Ansprüche 6 bis 10, bei welcher die Lichtemissions-Messeinrichtung und die Wassergehalt-Messeinrichtung gesonderte Vorrichtungen (1, 2) sind.

12. Anlage nach einem der Ansprüche 6 bis 10, bei welcher die Lichtemissions-Messeinrichtung und die Wassergehalt-Messeinrichtung ein oder mehrere gemeinsame Teile aufweisen, und insbesondere in einer gemeinsamen Vorrichtung (3) vereinigt sind.

13. Anlage nach Anspruch 12, bei welcher der Lichtemissions-Messeinrichtung und der Wassergehalt-Messeinrichtung eines oder mehrere der folgenden Teile gemeinsam sind: Messkammer (11, 21, 31), Lichtquelle (14, 24, 34), Lichtleiter (28), Lichtsensor (13, 23, 33), Messeinrichtungs-Steuerung (17, 27, 37), Auserte-Einrichtung (17, 27, 37).

14. Verwendung einer Lichtemissions-Messeinrichtung und/oder einer Wassergehalt-Messeinrichtung zur Durchführung eines Verfahrens nach einem der Ansprüche 1-5.

## Claims

1. A method for determining the germinative capacity of grains, in particular cereal grains, in which
a1) the grains are irradiated with light, the irradiation is terminated, and at least one characteristic variable of the light emitted by the grains after irradiation has been terminated is measured; and/or
a2) at least on characteristic variable of the light emitted by the grains without external excitation with light is measured;
b) a conclusion is reaches as to germinative capacity based on the measured characteristic variable(s), and the water content of the grains is measured,
**characterized in that** the water content measured in step b) is taken into account, thereby essentially correcting the dependence between the characteristic variable(s) of the emitted light and the water content.

2. The method according to claim 1, wherein the grains are irradiated in step a1) by at least one light pulse.

3. The method according to claim 1 or 2, wherein the steps a1) and/or a2) for acquiring measured values and/or the step b) are repeatedly performed one after he other, and the results obtained as a result are summarized to increase the accuracy of the value determined for germinative capacity.

4. The method according to one of claims 1 to 3, wherein one or more of the following characteristic light variables are measured:
- a determined intensity value of the light emitted in a first measuring interval after light irradiation has been terminated (NB1);
- a gauge for a decay time for one hyperbolic decay function, which is adjusted to a luminous intensity that tapers off over time after the irradiation has been terminated (aH) ;
- a gauge for the deviation of one measured decaying luminous intensity from the best-adjusted hyperbolic decay function (ChiH);
- a gauge for the deviation of one measured decaying luminous intensity from the best-adjusted exponential decay function (ChiE);
- an average value of X measured values for luminous intensity after light irradiation has been terminated, where X is a predetermined number (NB) ;
- the intensity of the light emitted without external excitation (DA).

5. The method according to one of claims 1 to 4, wherein the temperature of the grains is additionally measured or set to a known value, and the temperature value is taken into account in step b), thereby essentially correcting the dependence of the measured characteristic variable(s) of the emitted light on temperature.

6. A system for determining the germinative capacity of grains, in particular cereal grains, with a device (1, 3) for measuring the light emitted by the grains in one or more time intervals, wherein the device (1, 3) is designed in such a way that the grains are irradiated with light before the measuring time interval(s), with a device (2, 3) for measuring the water content of the grains,
**characterized by** an evaluator (17, 27, 37) that determines the germinative capacity of the grains from the measured emitted light with consideration of the measured water content.

7. The system according to claim 6, wherein the device for measuring light emission (1, 3) has a measuring chamber sealed against ambient light (11, 31) for holding the grains to be examined, at least one light sensor (13, 33) and a light source (14, 34), where the entry of light form the light source (14, 34) into the measuring chamber (11, 31) can be abruptly interrupted.

8. The system according to claim 7, wherein the light sensor (13, 33) is a photomultiplier that responds to individual photons.

9. The system according to one of claims 6 to 8, wherein the water content measuring device (2, 3) is an infrared reflection-measuring device.

10. The system according to one of claims 6 to 9, wherein the evaluator (17, 27, 37) is a suitably programmed computer.

11. The system according to one of claims 6 to 10, wherein the light emission measuring device and the water content measuring device are separate devices (1, 2).

12. The system according to one of claims 6 to 10, wherein the light emission measuring device and the water content measuring device have one or more shared parts, and in particular are combined into a shared device (3).

13. The system according to claim 12, wherein the light emission measuring device and water content measuring device share one or more of the following parts: Measuring chamber (11, 21, 31), light source (14, 24, 34), light guide (28), light sensor (13, 23, 33), measuring device controller (17, 27, 37) and evaluator (17, 27, 37).

14. A use of a light emission-measuring device and/or a water content measuring device for executing a method according to one of claims 1-5.

## Revendications

1. Procédé pour déterminer le pouvoir germinatif de graines, en particulier de grains de céréales, avec lequel
a1) les graines sont exposés à des rayons de lumière, l'exposition est terminée et on mesure au moins une grandeur caractéristique de la lumière, qui est émise par les graines après la fin de l'exposition aux rayons ; et/ou
a2) on mesure au moins uns grandeur caractéristique de la lumière, qui est émise par les graines sans excitation extérieure avec de la lumière ;
b) à partir de la/des grandeurs caractéristiques, on tire des conclusions sur le pouvoir germinatif, et on mesure la teneur en eau des graines,
**caractérisée en ce que**
la teneur en eau mesurée lors de l'étape b) est prise en compte et de ce fait la dépendance entre la/les grandeur(s) de la lumière et la teneur en eau est corrigée pour l'essentiel.

2. Procédé selon la revendication 1, avec lequel l'exposition des graines dans l'étape a1) s'effectue par au moins une impulsion lumineuse.

3. Procédé selon la revendication 1 ou 2, avec lequel les étapes a1) et/ou a2) servant à l'obtention des valeurs mesurées et/ou également l'étape b) sont exécutées plusieurs fois les unes après les autres et les résultats obtenus de cette façon sont regroupées pour améliorer la précision de la valeur calculée du pouvoir germinatif.

4. Procédé selon l'une quelconque des revendications 1 à 3, avec lequel une ou plusieurs des grandeurs de lumière caractéristiques suivantes sont mesurées :
- une valeur d'intensité calculée de la lumière émise lors d'un premier intervalle de temps de mesure après la fin de l'exposition à la lumière (NB1) ;
- une grandeur pour un temps de décroissance d'une fonction de désintégration hyperbolique, qui est adaptée à une intensité de lumière qui diminue après la fin de l'exposition avec le temps (aH) ;
- une grandeur pour l'écart d'une intensité de lumière décroissante et mesurée par rapport à la fonction de désintégration hyperbolique la mieux adaptée (ChiH) ;
- une grandeur pour l'écart d'une intensité de lumière décroissante et mesurée par rapport à la fonction de désintégration exponentielle la mieux adaptée (ChiE) ;
- une valeur moyenne de X valeurs mesurées de l'intensité de lumière après la fin de l'exposition à la lumière, X étant un nombre prédéfini (NB) ;
- l'intensité de la lumière émise sans excitation extérieure (DA).

5. Procédé selon l'une quelconque des revendications 1 à 4, avec lequel la température des graines est également mesurée ou réglée sur une valeur connue, et la valeur de température est prise en compte à l'étape b) et de ce fait la dépendance entre la (les) grandeur(s) caractéristique(s) mesurée(s) de la lumière émise et la température est corrigée pour l'essentiel.

6. Installation pour détermine le pouvoir germinatif de graines, en particulier de grains de céréales, avec un appareil (1, 3) pour mesurer la lumière émise par les graines dans un ou plusieurs intervalles de temps, l'appareil (1, 3) étant conçu de telle sorte que les graines sont exposées avec de la lumière avant le/les intervalle(s) de temps, avec un appareil (2, 3) pour la mesure de la teneur en eau des graines,
**caractérisé par** un appareil d'analyse (17, 27, 37) qui détermine le pouvoir germinatif des graines à partir de la lumière émise mesurée compte tenu de la teneur en eau mesurée.

7. Installation selon la revendication 6, avec laquelle l'appareil pour la mesure d'émission de lumière (1, 3) présente une chambre de mesure (11, 31) rendue étanche vis-à-vis de la lumière parasité pour le logement des graines à étudier, au moins un capteur de lumière (13, 33) et source lumineuse (14, 34), l'entrée de la source de lumière (14, 34) dans la chambre de mesure (11, 31) pouvant être interrompue brusquement.

8. Installation selon la revendication 7, avec laquelle le capteur de lumière (13, 33) est un photomultiplicateur répondant à des photons individuels.

9. Installation selon l'une quelconque des revendications 6 à 8, avec laquelle l'appareil de mesure de teneur en eau (2, 3) est un appareil de mesure à réflexion infrarouge.

10. Installation selon l'une quelconque des revendications 6 à 9, avec laquelle l'appareil d'analyse (17, 27, 37) est un ordinateur programmé de façon appropriée.

11. Installation selon l'une quelconque des revendications 6 à 10, avec laquelle l'appareil de mesure d'émission de lumière et l'appareil de mesure de teneur en eau sont des dispositifs séparés (1, 2).

12. Installation selon l'une quelconque des revendications 6 à 10, avec laquelle l'appareil de mesure et l'appareil de mesure de la teneur en eau présentent une ou plusieurs parties communes, et en particulier sont réunies dans un dispositif commun (3).

13. Installation selon la revendication 12, avec laquelle une ou plusieurs des parties suivantes est/sont communes à l'appareil de mesure d'émission de lumière et à l'appareil de mesure de la teneur en eau : chambre de mesure (11, 21, 31), source de lumière (14, 24, 34), conducteur optique (28), capteur de lumière (13, 23, 33), commande d'appareil de mesure (17, 27, 37), appareil d'analyse (17, 27, 37).

14. Utilisation d'un appareil de mesure d'émission de lumière et/ou d'un appareil de mesure de teneur en eau pour l'application d'un procédé selon l'une quelconque des revendications 1-5.
